# EUROPÄISCHE PATENTANMELDUNG

(11) **EP 4 715 322 A1**
(43) Veröffentlichungstag der Anmeldung: **25.03.2026**
(21) Anmeldenummer: 24201414.0
(22) Anmeldetag: 19.09.2024
(51) Int. Cl.: G01B 11/24, B21C 51/00, G01N 21/952

(54) **VERFAHREN ZUR BESTIMMUNG DES KRÜMMUNGSRADIUSVERLAUFS EINES ZU EINEM COIL AUFGEWICKELTEN METALLISCHEN BANDES**

(71) Anmelder: Primetals Technologies Germany GmbH, 91058 Erlangen (DE)
(72) Erfinder: Grasserbauer, Klaus, 4311 Schwertberg (AT); Seyr, Alfred, 4554 Oberschlierbach (AT)
(74) Vertreter: Metals@Linz

(57) **Zusammenfassung**

Verfahren zur Bestimmung des Krümmungsradiusverlaufs C_{R} eines zu einem Coil aufgewickelten metallischen Bandes anhand eines digitalen Bildes einer Stirnseite des Coils. In dem Bild werden die Coilwindungen mit Hilfe eines Bildverarbeitungsalgorithmus detektiert, vermessen und daraus wird ein Krümmungsradiusverlauf C_{R} ermittelt. Bei dem Verfahren zum Aufbau einer Datenbank für eine Haspelvorrichtung mit einem Haspeldorn und zumindest einer Korbrolle werden für eine Vielzahl von an der Haspelvorrichtung zu einem Coil aufgewickelten metallischen Bändern jeweils Anstellgrößen A des Haspeldorns und Produktionsdaten P der einzelnen Bänder erfasst und zusammen mit dem für ein jeweiliges Band ermittelten Krümmungsradiusverlauf C_{R} als ein Datensatz D in der Datenbank abgespeichert.

## Beschreibung

Die Erfindung betrifft ein Verfahren zur Bestimmung des Krümmungsradiusverlaufs C_{R} eines zu einem Coil aufgewickelten metallischen Bandes auf Basis eines digitalen Bildes einer Stirnseite des Coils.

Weiterhin betrifft die Erfindung ein Verfahren zum Aufbau einer Datenbank für eine Haspelvorrichtung, die einen Haspeldorn und zumindest eine Korbrolle umfasst.

Gewalztes Metallband - im Folgenden als 'Band' bezeichnet - weist in der Regel eine konstante Banddicke d über die Bandlänge auf und wird nach dem Austritt aus dem letzten Walzgerüst an einer Haspelvorrichtung auf einem Haspeldorn mit in radialer Richtung spreizbaren Segmenten zu einem zylinderförmigen Coil aufgewickelt. Die beiden Seitenflächen ("Bandkanten") des gewickelten Bandes, in Dickenrichtung des Bandes verlaufen, bilden die Stirnseiten des Coils aus. Eine Wicklungslage des Bandes wird auch als "Windung" oder "Coilwindung" bezeichnet. Die Banddicke eines zu haspelnden Bandes, insbesondere eines Warmbandes, kann zwischen ca. 0.5mm und ca. 25mm betragen, wobei beim Haspeln von Bändern mit einer Banddicke im Bereich von etwa 10mm oder mehr Bandbeschädigungen der innersten Coilwindungen in Form von mechanischen Abdrücken durch den darunterliegenden Bandanfang bzw. in Form von Knicken dieser Coilwindungen auftreten können.

Eine Haspelvorrichtung für Bänder umfasst weiterhin eine oder mehrere, in Umfangsrichtung um den Haspeldorn angeordnete Korbrollen, die den Beginn des Haspelvorgangs unterstützen: bevor der Bandanfang des zu haspelnden Bandes auf den Haspeldorn trifft, werden die Korbrollen mittels entsprechender Aktuatoren in einer jeweiligen radialen Ausgangsposition zum Haspeldorn beabstandet, wobei die radialen Abstände der einzelnen Korbrollen in Wickelrichtung gesehen abnehmen, sodass ein einlaufendes Band um den Haspeldorn herumgelenkt und gleichzeitig zum Haspeldorn hingeführt wird. Die Position des Bandanfanges ist dabei der Anlagenautomation der das Band produzierenden Anlage bzw. der Anlagenautomation der betreffenden Haspelvorrichtung zu jedem Zeitpunkt bekannt. Sobald der Bandanfang den Haspeldorn erreicht hat, pressen die Korbrollen den entsprechenden Bandabschnitt in radialer Richtung gegen den Haspeldorn.

Um beim Aufhaspeln des Bandes die vorgenannten Beschädigungen der inneren Coilwindungen zu minimieren, wird jede Korbrolle kurzzeitig von dem Band abgestellt (d.h. radial nach außen verfahren), sobald der Bandanfang in radialer Richtung gesehen unter der betreffenden Korbrolle hindurchläuft. Zudem befindet sich beim Anwickeln des Bandes der Haspeldorn in einer ersten gespreizten Stellung, d.h. die spreizbaren Segmente des Haspeldorns sind zumindest teilweise in radialer Richtung ausgefahren, sodass der Coil nach Beendigung des Wickelvorganges nach dem Einfahren der Segmente problemlos vom Haspeldorn abgezogen werden kann.

Weiterhin rotiert beim Anwickeln des Bandes der Haspeldorn in Wickelrichtung mit einer bestimmten Voreilung V (diese ist eine Funktion der Differenz zwischen der Haspeldorngeschwindigkeit v_{D} (konkret: der Geschwindigkeit der Mantelfläche des näherungsweise zylinderförmigen Haspeldorns) und der Einlaufgeschwindigkeit v_{B} des aufzuwickelnden Bandes): dies verhindert einerseits ein Verklemmen des Bandanfanges in den Zwischenräumen zwischen den gespreizten Dornsegmenten, andererseits wird durch die Voreilung V im Zusammenspiel mit den Korbrollen, die den einlaufenden Bandanfang in radialer Richtung gegen den Haspeldorn pressen, eine entsprechende Gleitreibungskraft zwischen dem Band und dem Haspeldorn hervorgerufen.

Mit fortschreitender Umschlingung des Haspeldorns durch das einlaufende Band steigt die Gleitreibungskraft solange an bis Haftreibung einsetzt und der bereits aufgewickelte Abschnitt des Bandes und der Haspeldorn synchron miteinander rotieren. Dies stellt den Abschluss der Anwickelphase dar und kann beispielsweise anhand des Motordrehmoments des Haspeldornantriebs detektiert werden, welches sich zu diesem Zeitpunkt signifikant erhöht.

Nach Abschluss der Anwickelphase werden die Korbrollen für den weiteren Haspelvorgang nicht mehr benötigt und vollständig vom entstehenden Coil abgestellt (d.h. in radialer Richtung von diesem wegbewegt); zudem erfolgt in der Regel ein Nachspreizen des Haspeldorns: das bedeutet, dass die Dornsegmente mit einer bestimmten Kraft radial nach außen gedrückt werden, um eine sichere Reibschlussverbindung mit dem Coil herzustellen. Weiterhin erfolgt nach Beendigung der Anwickelphase eine Umstellung des Haspeldornantriebs von einer Voreilungsregelung auf eine Bandzugregelung, bei der von dem Haspeldorn ein bestimmter vorzugebender Bandzug (im Sinne einer Zugkraft) auf das Band ausgeübt wird. Dies ist notwendig, da die Bandgeschwindigkeit v_{B} des aufzuwickelnden Bandes von dem letzten Walzgerüst vorgegeben wird und durch Ausüben einer entsprechenden Zugkraft auf das Band ein zu lockeres Aufwickeln bzw. ein Stau ("Cobble") des Bandes in der Haspelvorrichtung verhindert wird.

Bei ordnungsgemäßem Wickelvorgang des Bandes bildet dieses - in Axialrichtung des Haspeldornes gesehen - um diesen eine Spirale aus aneinander anliegenden Windungen aus, wobei jede Windung in Bezug auf den Haspeldorn eine Innen- und eine Außenfläche aufweist und wobei ein "lokaler Krümmungsradius" geometrisch als Schmiegekreis in einem betrachteten Punkt der Spirale definiert ist. Dem spiralförmig aufgewickelten Band kann somit ein sogenannter Krümmungsradiusverlauf C_{R} als Abfolge der lokalen Krümmungsradien zugeordnet werden, der als Funktion des Umschlingungswinkels um den Haspeldorn von Innen nach außen (bzw. äquivalent dazu als Funktion der aufgewickelten Bandlänge) im Wesentlichen monoton wächst. Der Ausdruck "im Wesentlichen" bedeutet in diesem Zusammenhang, dass lokale Abweichungen, die sich auf kurze Abschnitte der Spirale in Umfangsrichtung von beispielsweise bis zu 30° beziehen, von dem monotonen Verhalten abweichen können.

An jenen Stellen, an denen das Band jeweils über seinen eigenen Bandanfang gewickelt wird, verursacht dieser aufgrund der Banddicke in radialer Richtung einen bestimmten Höhenversatz der darüberliegenden Windungen, wobei dieser Höhenversatz für die innerste Windung am stärksten ausgeprägt ist und für darüberliegende Windungen kontinuierlich abnimmt. Durch diesen Höhenversatz wird auch der lokale Krümmungsradius der Spirale bzw. des Bandes an den entsprechenden Stellen beeinflusst, was sich in entsprechenden Ausschlägen des Krümmungsradiusverlaufs C_{R} auswirkt. Liegt eine derartige Abweichung außerhalb vorgebbarer Grenzwerte, so entspricht dies einer entsprechend starken lokalen Verbiegung des gewickelten Metallbandes, sodass dieses gegebenenfalls abgewertet werden muss, da die Verbiegung beispielsweise eine nichtelastische Verformung des Bandes darstellen und folglich dauerhaft sein kann.

Das Ausmaß der Verformung im Bereich über dem Bandanfang kann über die Regelung der Korbrollen (Anstell- und Abhebezeitpunkte sowie die Anstellkraft an das Band), die Voreilungs- bzw. Bandzugregelung sowie die Spreizkraft F_{S} des Haspeldorns beeinflusst werden. Hingegen kann die Einlaufgeschwindigkeit v_{B} von der Haspelvorrichtung nicht beeinflusst werden, da die Einlaufgeschwindigkeit v_{B} vom letzten Walzgerüst, das von dem Band durchlaufen wird, vorgegeben wird. Ein sanftes Anwickeln des Bandes durch die Haspelvorrichtung verringert zwar die lokalen Verbiegungen der innersten Windungen, erhöht jedoch die Gefahr für einen Cobble. Umgekehrt führt ein straffes Anwickeln (beispielsweise mit entsprechend starker Voreilungs- bzw. Bandzugsregelung) zu einem sicheren Wickelprozess, jedoch werden die Verbiegungen oder Bandeindrücke der innersten Windungen dabei stärker ausgeprägt.

Aus der EP 3 671 113 A1 ist ein Verfahren zur Bestimmung eines Knicks in der innersten Windung eines zu einem Coil gewickelten Bandes bekannt, gemäß dem ein Bild von einer Stirnfläche des Coils mit einer darauf projizierten Laserlinie ausgewertet wird. Aus den gemessenen Intensitätsunterschieden an unterschiedlichen Punkten der Laserlinie wird ein Windungsabstand der innersten Wickellage zu Coilachse für drei unterschiedliche Winkelpositionen in Bezug auf die Coilachse ermittelt. Wenn der Windungsabstand einen bestimmten Schwellwert unterschreitet, wird dies als Knick klassifiziert.

Es ist eine erste Aufgabe der vorliegenden Erfindung, ein Verfahren anzugeben, mit dem in einfacher und reproduzierbarer Weise ein Maß für die Wickelqualität von in Form von Coils aufgewickelten Bändern ermittelt werden kann.

Da zudem die lokalen Verbiegungen der inneren Windungen, wie voranstehend erwähnt, von Details des Wickelprozesses selbst abhängen, besteht eine zweite Aufgabe der Erfindung darin, einen sinnvollen Kompromiss zwischen einer ausreichenden Prozesssicherheit des Wickelprozesses einerseits und einem materialschonenden Wickelverlauf an einer bestimmten Haspelvorrichtung andererseits zu finden.

Eine dritte Aufgabe der gegenständlichen Erfindung bezieht sich auf den Umstand, dass Bänder aufgrund von inhärenten Defekten im Bandmaterial selbst (z.B. einer Säbeligkeit) auch auf einer optimal eingestellten Haspelvorrichtung in der Regel zu Coils mit nicht-idealer Wickelform gewickelt werden. Anders ausgedrückt: eine optimal eingestellte Haspelvorrichtung wäre nur dann in der Lage, ideal gewickelte Coils zu produzieren, wenn die Bänder selbst keine Defekte aufweisen würden. Erfindungsgemäß wird in diesem Zusammenhang vorgeschlagen, anhand einer Vielzahl von Bändern, die an ein- und derselben Haspelvorrichtung zu Coils gewickelt werden, eine Datenbank zu erstellen. Zur Lösung der dritten Aufgabe der Erfindung kann diese Datenbank dann nach erfolgtem Aufwickeln der Vielzahl an Bändern ausgewertet werden, um die Auswirkungen von inhärenten Defekten in den Bändern von den Auswirkungen nicht-optimal eingestellter Wickelparameter an der betreffenden Haspelvorrichtung unterscheiden zu können. Anders ausgedrückt können aus einer derartigen Datenbank jene Parameter, die für eine optimale Einstellung der Haspelvorrichtung relevant sind, mit Hilfe statistischer Methoden herausgefiltert werden. Prinzipielle Verfahren zum Aufbau und zur Auswertung einer derartigen Datenbank sind beispielsweise aus der EP 4 124 398 A1 bekannt.

Die erste Aufgabe wird erfindungsgemäß durch ein Verfahren mit den Merkmalen des Anspruchs 1 gelöst, das einen Krümmungsradiusverlauf C_{R} eines zu einem Coil aufgewickelten Bandes ermittelt. Die zweite und dritte Aufgabe werden durch ein Verfahren zum Aufbau einer Datenbank für eine bestimmte Haspelvorrichtung mit den Merkmalen des Anspruchs 9 gelöst, wobei in die Datenbank der jeweilige Krümmungsradiusverlauf C_{R} sowie die zugehörigen Wickelparameter einer größeren Anzahl von an der betreffenden Haspelvorrichtung gewickelten Bändern eingehen. Vorteilhafte Ausgestaltungen der Erfindung sind Gegenstand der jeweiligen Unteransprüche.

Bei dem erfindungsgemäßen Verfahren zur Bestimmung eines Krümmungsradiusverlaufs C_{R} eines spiralförmig um eine Coilachse zu einem Coil aufgewickelten metallischen Bandes mit der Banddicke d wird in einem ersten Schritt S1 ein zweidimensionales, digitales Bild von einer Stirnseite des Coils in Richtung der Coilachse erstellt, wobei die Stirnseite durch eine Seitenfläche des Bandes ausgebildet wird. Der Ausdruck "in Richtung der Coilachse" bedeutet in diesem Zusammenhang, dass die Bildebene im Wesentlichen normal zur Coilachse ausgerichtet ist, wobei jedoch eine Abweichung davon um bis zu 15° von dem nachfolgenden bildverarbeitenden Algorithmus ausgeglichen werden kann: dadurch kann das digitale Bild beispielsweise auch freihändig von einer Bedienperson, beispielsweise mittels einer Digitalkamera, erstellt werden. Weiterhin wird eine Innen- bzw. Außenkante einer Seitenfläche durch ihren Übergang zu der entsprechenden Innen- bzw. Außenseite (in Bezug auf die Coilachse) des gewickelten Bandes ausgebildet.

Das digitale Bild liegt als digitaler Datensatz vor und ist aus einzelnen Pixeln aufgebaut, wobei jedem Pixel zumindest eine Helligkeitsinformation und optional eine Farbinformation zugeordnet ist. Da die Coilachse während des Haspelvorgangs mit der Drehachse des Haspeldorns zusammenfällt, sind aus der vorgenannten Perspektive die einzelnen Windungen des Coils einsehbar. Damit die einzelnen Windungen in dem Bild voneinander unterschieden werden können, ist lediglich eine ausreichende flächige Beleuchtung der Stirnseite des Coils nötig; eine Projektion spezieller Lichtmuster (z.B. Laserlinien) auf die Stirnseite des Coils wird für das erfindungsgemäße Verfahren nicht benötigt.

In einem darauffolgenden zweiten Schritt S2 wird, beispielsweise durch Ausführen eines ersten bildverarbeitenden Algorithmus, in dem digitalen Bild die Stirnseite des Coils detektiert. Dies kann beispielsweise durch Anwendung einer auf Kreisformen spezialisierten Hough-Transformation auf das Bild (bzw. auf den digitalen Datensatz des Bildes) geschehen. Alternativ dazu kann das Bild bzw. können die digitalen Bilddaten auch einem neuronalen Netz zugeführt werden, welches auf das Erkennen kreisförmiger Strukturen trainiert worden ist. In jedem Fall werden dadurch in dem Bild jene Pixelbereiche, die nicht als Teil der Stirnseite erkannt werden (Umgebung außerhalb des Coilumfanges sowie Bereich innerhalb des Coilauges), aus den Bilddaten ausgeschieden, indem z.B. die Helligkeitsinformationen der betreffenden Pixel auf einen charakteristischen Wert (z.B. 0) gesetzt werden. Optional kann dabei das Bild auf bestimmte Bereiche beschnitten werden, sodass als Bilddatenbereich im Wesentlichen lediglich ein den Coilumfang umschreibendes Rechteck verbleibt.

Nach dem zweiten Schritt S2, d.h. nach dem Detektieren der Stirnseite in dem Bild erfolgt in einem dritten Schritt S3 eine Bestimmung einer Innen- und/oder Außenkante der in dem Bild erfassten Seitenfläche des Bandes, beispielsweise durch Ausführen eines zweiten bildverarbeitenden Algorithmus. Bevorzugt kann die Bestimmung einer Innen- und/oder Außenkante auf Basis von lokalen Helligkeitsgradienten in dem Bild erfolgen. Die Ermittlung lokaler Helligkeitsgradienten erfolgt separat für jedes Bildpixel auf Basis der Differenz des Helligkeitswertes des betrachteten Bildpixels zu den Helligkeitswerten von benachbarten Bildpixeln und ist aus der Fachliteratur beispielsweise in Form des sog. "Canny Edge Detection"-Algorithmus bekannt. Dabei werden jene Pixel in den Bilddaten ausgeschieden, die außerhalb von Bildbereichen mit wesentlichen Helligkeitsgradienten liegen.

Die Bestimmung einer Innen- und/oder Außenkante kann umgesetzt werden, indem die Bilddaten beispielsweise derart verändert werden, dass in den Bilddaten nur mehr solche Pixel markiert sind (z.B. auf einen bestimmten Wert gesetzt werden, während die restlichen Pixel des Bildes auf einen anderen Wert gesetzt werden), die die vorgenannten Innen- bzw. Außenkanten einer Seitenfläche nachzeichnen. Der Begriff "Nachzeichnen" ist im vorliegenden Zusammenhang als "im Wesentlichen parallel verlaufend" zu verstehen, da bei einem Coil, dessen Windungen in der Regel direkt aneinander anliegen, streng genommen jeweils eine im obigen Sinne definierte Innenkante mit der Außenkante der darunterliegenden Windung zusammenfällt. Durch die Bestimmung einer Innen- und/oder Außenkante auf Basis von lokalen Helligkeitsgradienten resultieren jedoch in den Bilddaten in der Regel Linien, die geringfügig parallel versetzt in Bezug auf die tatsächlichen Innen- bzw. Außenkanten verlaufen.

In einem nachfolgenden vierten Schritt S4 werden die Koordinaten Xᵢ / Xᵢ' der zur Innen- und/oder Außenkante korrespondierenden Pixel bestimmt und die Koordinaten werden in einem jeweiligen Datenarray angeordnet. Beispielsweise werden von der Innen- und/oder Außenkante jeweils zumindest ein Endpunkt (bzw. zumindest ein einem jeweiligen Endpunkt entsprechendes Pixel) ermittelt. Es wird somit für die Innen- bzw. die Außenkante jeweils entweder derjenige Endpunkt ermittelt, der näher zur Coilachse liegt, oder, alternativ dazu, jeweils der weiter von der Coilachse entfernte Endpunkt. Die Koordinaten der Endpunkte werden als erste Elemente X₁ bzw. X₁' in ein jeweiliges korrespondierendes Datenarray eingetragen. Anschließend werden, ausgehend von den jeweiligen Endpunkten, die Koordinaten Xᵢ / Xᵢ' des jeweils nächsten benachbarten, zur Innen- bzw. Außenkante korrespondierenden Pixels ebenfalls als Element in das jeweilige Datenarray eingefügt. Dieser Vorgang wird wiederholt, bis der zweite Endpunkt der in den Bilddaten bestimmten Innen- bzw. Außenkante erreicht ist.

Die Anordnung in dem Datenarray korrespondiert somit zur räumlichen Anordnung der jeweils benachbarten, die Innen- bzw. Außenkante nachzeichnenden Bildpixel; jedes der Datenarrays repräsentiert somit - abhängig von der Lage des jeweils identifizierten Endpunktes X₁ bzw. X₁' - einen entweder von innen nach außen oder von außen nach innen verlaufenden, geordneten Satz an Koordinaten {Xᵢ} bzw. {Xᵢ'}, der zu dem spiralförmigen Verlauf der entsprechenden Innen- bzw. Außenkante der Seitenfläche des Bandes korrespondiert. Da die Erfindung auf den Verlauf des Krümmungsradius abzielt und nicht auf absolute Werte der Krümmung des gewickelten Bandes, ist es in diesem Zusammengang unerheblich, in welchem Maßstab bzw. in welchen Einheiten die Koordinaten Xᵢ / Xᵢ' abgespeichert werden bzw. dass es sich bei den ermittelten Koordinaten Xᵢ / Xᵢ' beispielsweise um Bildkoordinaten und nicht um Koordinaten in absoluten Maßeinheiten handelt. Entscheidend ist lediglich, dass die Koordinatenwerte der einzelnen Pixel relativ zueinander korrekt sind.

In einem nachfolgenden fünften Schritt S5 wird der Krümmungsradiusverlauf C_{R} des Bandes aus dem Datenarray der dazu korrespondierenden Innen- und/oder Außenkante des Bandes ermittelt. Wenn das Datenarray sowohl für die Innen- als auch für die Außenkante der Seitenfläche vorliegt, kann entweder nur eines der beiden Datenarrays für die Auswertung des Krümmungsradiusverlaufs C_{R} herangezogen werden (z.B. dasjenige, welches mehr Elemente aufweist) oder es kann ein gemittelter Krümmungsradiusverlauf C_{R} des Bandes aus den beiden Datenarrays ermittelt werden.

Gemäß einer bevorzugten Ausgestaltung des erfindungsgemäßen Verfahrens ist die Auflösung des Bildes derart bemessen, dass die Banddicke d des Bandes auf zumindest drei Pixel des Bildes abgebildet wird. Die Auflösung des Bildes ergibt sich aus der Brennweite der Aufnahmeoptik und ihrem Abstand zur Stirnseite des Coils sowie dem Auflösungsvermögen des bilderzeugenden Sensors (z.B. dem Pixelabstand im Falle eines elektronischen Sensors). Eine ausreichende Auflösung des Bildes kann z.B. visuell rasch und unkompliziert von einem Bediener auf einem Live-Display des Bildaufnahmegeräts (z.B. Handy-Kamera) überprüft werden.

Gemäß einer weiteren bevorzugten Ausgestaltung des erfindungsgemäßen Verfahrens erfolgt nach der Ausführung des zweiten Schritts S2, d.h. nach dem Detektieren der Stirnseite des Coils in dem Bild, ein Weichzeichnen des Bildes in tangentialer Richtung R_{T} in Bezug auf die Coilachse. Dabei verläuft die tangentiale Richtung R_{T} in jedem Bildpunkt normal zu einer Verbindungslinie zwischen dem betrachteten Bildpunkt und der Coilachse in dem Bild. Beispielsweise kann für das Weichzeichnen ein Gaußfilter auf die Bilddaten angewandt werden, der - bezogen auf Polarkoordinaten, deren Koordinatenursprung mit dem Zentrum des Coilauges bzw. der Coilachse zusammenfällt - nur in tangentialer Richtung R_{T} wirkt. Durch das Weichzeichnen der Bilddaten in tangentialer Richtung R_{T} werden Unregelmäßigkeiten (z.B. Verschmutzungen oder Verzunderungen) der abgebildeten, spiralförmig verlaufenden Seitenflächen des Bandes verwischt und abgeschwächt, während gleichzeitig in radialer Richtung keine oder allenfalls nur eine viel schwächere Weichzeichnung erfolgt. Diese Art der Weichzeichnung wird auch als richtungsabhängige Weichzeichnung bzw. "Adaptive Blurring" bezeichnet, die die Abgrenzung zwischen aneinandergrenzenden Seitenflächen (entsprechend den übereinanderliegenden Coilwindungen des Bandes) deutlicher hervorhebt. Dadurch wird eine nachfolgende Vermessung des genauen Verlaufes der Windungen erleichtert.

Falls es sich bei dem Bild des Coils bzw. von dessen Stirnseite um ein Farbbild handelt (d.h. wenn jedem Pixel des Bildes eine Farbinformation zugeordnet ist), kann vor dem Weichzeichnen eine Umwandlung der Bilddaten in Monochromwerte (sog. "Grayscale-Conversion") erfolgen, da einerseits für die nachfolgenden Verfahrensschritte keine Farbinformation benötig wird und andererseits eine Grayscale-Conversion das Rauschen in der Bildinformation verringert, wodurch eine bessere Detektion der Innen- bzw. Außenkante ermöglicht wird.

Gemäß einer weiteren bevorzugten Ausgestaltung des erfindungsgemäßen Verfahrens erfolgt nach dem dritten Schritt S3, d.h. nach der Bestimmung der Innen- und/oder Außenkante der Seitenfläche des Bandes, eine Skelettierung der in den Bilddaten des Bildes bestimmten Innen- und/oder Außenkante. Bei der Skelettierung werden kurze (z.B. bis zu maximal 30 bis 50 Pixel umfassende), zusammenhängende Pixelgruppen aus den Bilddaten eliminiert (z.B. Helligkeitswerte dieser Pixel auf 0 gesetzt), da diese Pixel keine realen Strukturen nachbilden, sondern lediglich Artefakte der Auswertung der Helligkeitsgradienten aus dem vorangegangenen dritten Schritt S3 darstellen. Zudem werden die verbleibenden, räumlich zusammenhängenden und noch nicht ausgeschiedenen Pixel des Bildes mittels morphologischer Bildoperationen auf eine Linienbreite von einem Pixel reduziert, d.h. es werden Pixel, die eine größere Breite als ein Pixel bei einer zusammenhängenden Linie hervorrufen, ebenfalls ausgeschieden. Abschließend kann das derart verarbeitete Bild binarisiert werden, indem beispielsweise Helligkeitswerte der noch nicht ausgeschiedenen Pixel auf den Wert 1 und jene der restliche Pixel auf den Wert 0 gesetzt werden. Als Resultat verbleiben als Bildinformation ein oder zwei zusammenhängende, im Wesentlichen parallel zueinander verlaufende Linien an Pixeln, die der Innenkante bzw. der Außenkante der Seitenfläche des spiralförmig gewickelten Bandes entsprechen. Bei derartig skelettierten Linien ist jeder Endpunkt (mit z.B. einem Helligkeitswert von 1) durch jeweils nur ein unmittelbar angrenzendes Pixel (ebenfalls mit demselben Helligkeitswert) charakterisiert, wohingegen jedes Pixel, das - im geometrischen Sinne - innerhalb einer der Linien liegt, jeweils durch zwei unmittelbar angrenzende Pixel mit demselben Helligkeitswert (z.B. 1) gekennzeichnet ist. Zu den unmittelbar angrenzenden Pixel werden die bis zu 8 umgebenden Pixel eines betrachteten Pixels gezählt.

Bevorzugt erfolgt die Ermittlung des Krümmungsradiusverlaufs C_{R} dadurch, dass - geometrisch gesehen - für eine Punktmenge, die einen bestimmten Punkt des Datenarrays und dessen N nächstliegende Nachbarn zu beiden Seiten umfasst, jeweils ein Kreis (sog. "Schmiegekreis") ermittelt wird, der sich im betrachteten Punkt bestmöglich an die Punktmenge annähert. Der Radius des resultierenden Kreises wird als Krümmungsradius des Bandes in dem betrachteten Punkt gespeichert und der Vorgang für alle weiteren Punkte eines Datenarrays wiederholt. Auch wenn ein ausgewählter Punkt nicht N Nachbarpunkte auf einer Seite aufweist (z.B. am oder in der Nähe des jeweiligen Endpunktes der ermittelten Innen- bzw. Außenkante), kann trotzdem ein entsprechender Kreis durch die kleinere Punktmenge ermittelt werden. Konkret werden somit für jedes Element Xᵢ bzw. Xᵢ' des Datenarrays der Innen- und/oder Außenkante das jeweilige Element Xᵢ bzw. Xᵢ' selbst und zusätzlich N vor und N hinter dem Element Xᵢ bzw. Xᵢ' angeordnete Elemente X_{i-N},..., X_{i+N} bzw. X_{i-N}', ..., X_{i+N}' aus dem jeweiligen Datenarray ausgewählt (mit N als einer natürlichen Zahl); in die räumlichen Koordinaten der (maximal) jeweils 2N+1 ausgewählten Elemente X_{i-N}, ..., X_{i+N} bzw. X_{i-N}',...,X_{i+N}' wird ein Kreis mit dem Radius Rᵢ bzw. Rᵢ' eingepasst und der Radius Rᵢ oder Rᵢ' (oder ein Kombinationswert aus Rᵢ und Rᵢ') wird als ein Wert dem Krümmungsradiusverlauf C_{R} hinzugefügt. Da weiterhin die Innen- bzw. Außenkante den spiralförmigen Verlauf des gewickelten Bandes nachzeichnen, können die Koordinaten der Pixel in eine Bandlänge umgerechnet werden, sodass der ermittelte Krümmungsradiusverlauf C_{R} in der Folge als punktweise Funktion der Länge des gewickelten Bandes vorliegt. Wiederum liegt diese Länge nicht notwendigerweise in absoluten Maßeinheiten in Bezug auf den Coil, sondern in relativen Einheiten in Bezug auf die ermittelten Pixelkoordinaten vor, was jedoch für die Bewertung des Verlaufes des Krümmungsradius unerheblich ist.

Auch wenn zur Bestimmung eines Kreises durch eine Punktmenge prinzipiell drei Punkte ausreichend sind, ist es vorteilhaft, dafür eine größere Anzahl von Punkten heranzuziehen. In einer weiteren bevorzugten Ausgestaltung des erfindungsgemäßen Verfahrens werden daher beidseits eines betrachteten Elements Xᵢ bzw. Xᵢ' zwischen N = 50 und 200 vor- und nachgeordnete Elemente des jeweiligen Arrays für die Ermittlung des Krümmungsradius in dem betreffenden Element Xᵢ bzw. Xᵢ' herangezogen. Geometrisch werden somit beidseits zwischen N=50 und 200 benachbarte Punkte zum Einpassen eines Kreises durch einen bestimmten Punkt verwendet. Beispielsweise wird der Kreis mittels eines Least-Square-Fit-Verfahrens in die ausgewählte Punktmenge eingepasst. Ein Least-Square-Fit-Verfahren stellt ein bekanntes mathematisches Verfahren zur Ermittlung einer Zielgröße (im konkreten Fall eines Kreises) dar, das auch bei stark fehlerbehafteten Eingangsgrößen (im vorliegenden Fall fehlerbehaftete Koordinaten der ausgewählten Pixel) ein zuverlässiges Ergebnis für die Zielgrößen (Lage und Radius des gesuchten Kreises) liefert.

Durch die geschilderte Vorgangsweise kann der Krümmungsradius in dem jeweiligen Punkt mit besonders hoher Genauigkeit bestimmt werden, da durch ein passend gewähltes Verfahren und eine entsprechend hohe Anzahl an verwendeten Punkten statistische Fehler, die beispielsweise durch die endliche Pixelgröße und die damit einhergehenden räumlichen Diskretisierungsfehler bei der Bildverarbeitung verursacht werden, ausgeglichen werden können.

Bei dem erfindungsgemäßen Verfahren zum Aufbau einer Datenbank für eine Haspelvorrichtung, wobei die Haspelvorrichtung einen Haspeldorn und zumindest eine Korbrolle umfasst, wird jeweils in einem ersten Schritt S1' ein metallisches Band von der Haspelvorrichtung zu einem Coil aufgewickelt. Dabei werden Anstellgrößen A des Haspeldorns und Produktionsdaten P des Bandes erfasst. In einem zweiten Schritt S2' nach erfolgtem Aufwickeln des Bandes wird ein Krümmungsradiusverlauf C_{R} des Bandes gemäß dem erfindungsgemäßen Verfahren ermittelt. In einem dritten Schritt S3' wird der ermittelte Krümmungsradiusverlauf C_{R} zusammen mit den erfassten Anstellgrößen A und Produktionsdaten P als ein Datensatz D in die Datenbank eingefügt. Die Sequenz der Schritte (S1', S2', S3') wird für eine Vielzahl (z.B. mindestens 50) weiterer Bänder wiederholt.

Gemäß einer weiteren bevorzugten Ausgestaltung des erfindungsgemäßen Verfahrens umfassen die Produktionsdaten P zumindest eine Banddicke d und/oder eine Wickeltemperatur T_{c} des jeweiligen Bandes. Weiterhin können die Produktionsdaten P eine Streckgrenze und/oder eine Säbeligkeit und/oder eine Planheit und/oder einen Keilwert des betreffenden Bandes umfassen. Als Säbeligkeit - auch als "Seitengeradheit" bezeichnet - wird die Abweichung einer Seitenkante - bzw. einer Seitenfläche - des Bandes von einer geraden Linie über eine vorgegebene Messlänge bezeichnet. Die Definitionen für Planheit bzw. für einen Keilwert eines Bandes sind beispielsweise aus der EP 3 691 806 B1 bzw. aus der WO 2019/086172 A1 bekannt.

In einer weiteren bevorzugten Ausgestaltung des erfindungsgemäßen Verfahrens zum Aufbau einer Datenbank umfassen die Anstellgrößen A zumindest einen Bandzug B und/oder eine Voreilung V des Haspeldorns und/oder eine Spreizkraft F_{S} zum Nachspreizen des Haspeldorns und/oder einen Nachspreizzeitpunkt t_{S} des Haspeldorns und/oder einen Vorspreizgrad G des Haspeldorns. Der Vorspreizgrad G entspricht einer bestimmten Öffnungsstellung der Segmente des Haspeldorns in radialer Richtung und wird z.B. in Prozent einer maximal möglichen Öffnungsstellung angegeben; ein Vorspreizgrad größer Null beim Wickelvorgang ist Voraussetzung, um nach Fertigstellung des Coils diesen vom Haspeldorn abziehen zu können, wobei die Segmente des Haspeldorns in radialer Richtung zusammengezogen werden. Weiterhin können die Anstellgrößen A eine Anstellkraft F_{K} und/oder eine Anstellposition P_{K} für zumindest eine Korbrolle des Haspeldorns umfassen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das in Zusammenhang mit den Figuren näher erläutert wird. Dabei zeigen:
Figur 1A (FIG 1A) einen Haspeldorn beim Anwickeln eines Bandes zu einem Coil vor Vollendung der ersten Windung,
Figur 1B (FIG 1B) einen Haspeldorn beim Anwickeln eines Bandes zu einem Coil bei Vollendung der ersten Windung,
Figur 2A - Figur 2G (FIG 2A - FIG 2G) ein Ausführungsbeispiel des erfindungsgemäßen Verfahrens zur Bestimmung eines Krümmungsradiusverlaufs C_{R} aus einem Bild,
Figur 3 (FIG 3) ein Ausführungsbeispiel des erfindungsgemäßen Verfahrens zum Aufbau einer Datenbank.

Einander entsprechende Teile sind in den Figuren mit denselben Bezugszeichen versehen.

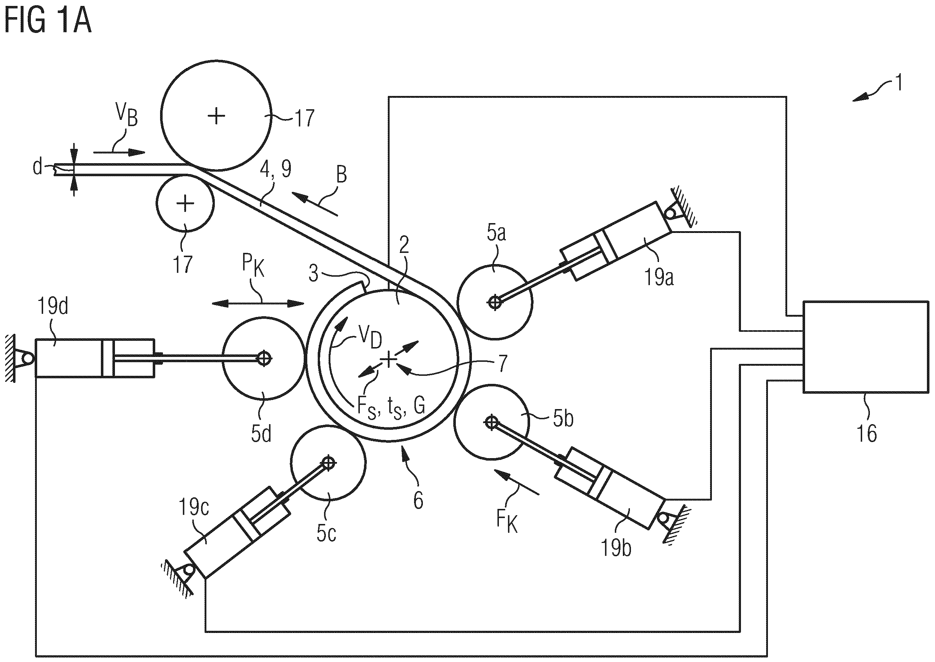

FIG 1A zeigt eine Haspelvorrichtung 1 mit einem Haspeldorn 2, auf den ein metallisches Band 4 zu einem Coil 6 aufgewickelt wird. Der Haspeldorn 2 ist in Richtung seiner Rotationsachse abgebildet, die mit der Coilachse 7 zusammenfällt. Das mit einer Einlaufgeschwindigkeit v_{B} einlaufende Band 4 weist eine Banddicke d auf und wird von Treiberrollen 17 in Richtung des Haspeldorns 2 umgelenkt. Der Haspeldorn 2 (konkret: die Mantelfläche des Haspeldorns) rotiert in FIG 1A mit einer Haspeldorngeschwindigkeit v_{D} im Uhrzeigersinn. Um den Haspeldorn herum sind Korbrollen 5a-5d angeordnet, die von einem jeweiligen Aktor 19a-19d in radialer Richtung in Bezug auf die Rotationsachse des Haspeldorns 2 mit einer jeweiligen Anstellkraft F_{K} gegen den Haspeldorn 2 angestellt bzw. von diesem wegbewegt ("abgehoben") werden können. Dabei werden die Korbrollen 5a-5d von den Aktoren 19a-19d auf eine jeweilige Anstellposition P_{K} verfahren.

Um den Anwickelvorgang des Bandes 4 zu unterstützen, wird dieses während des Wickelns der ersten Windungen (z.B. bis zur Fertigstellung der innersten drei bis fünf Windungen) von den Korbrollen 5a-5d gegen den Haspeldorn 2 gedrückt, wobei zur Vermeidung von Bandbeschädigungen eine Korbrolle 5a-5d immer dann kurzzeitig abgehoben wird, wenn sich der Bandanfang 3 unmittelbar (in radialer Richtung in Bezug auf die Rotationsachse des Haspeldorns 2 gesehen) unterhalb der betreffenden Korbrolle 5a-5d durchbewegt.

Während der Anwickelphase ist die Haspeldorngeschwindigkeit v_{D} größer als die Einlaufgeschwindigkeit v_{B} des Bandes 4 (entsprechend einer Voreilung V), sodass durch die Gleitreibung zwischen Band 4 und Haspeldorn 2 eine Kraft - auch als Bandzug B bezeichnet - auf das einlaufende Band 4 ausgeübt wird. Weiterhin ist während des Anwickelns des Bandes 4 der Haspeldorn mit einem bestimmten Vorspreizgrad G (durch entsprechendes Öffnen der Dornsegmente) in radialer Richtung geöffnet. Eine Spreizkraft Fₛ, mit der der Haspeldorn 2 bzw. die Dornsegmente nach Beendigung der Anwickelphase zu einem bestimmten Nachspreizzeitpunkt t_{S} gegen den Coil 6 gedrückt werden können, ist durch zwei radial von der Coilachse 7 wegführende Pfeile symbolisiert. Die Vorgabe der Haspeldorngeschwindigkeit v_{D} entsprechend einer Voreilung V, der Spreizkraft F_{S}, des Nachspreizzeitpunktes t_{S} und des Vorspreizgrades G des Haspeldorns 2 sowie der jeweiligen Anstellkräfte F_{K} und der Anstellpositionen P_{K} der einzelnen Korbrollen 5a-d erfolgt durch eine Automatisierungseinheit 16 und ist in FIG 1A mittels entsprechender Verbindungslinien symbolisiert. Dabei können die genannten Größen an die jeweiligen Gewerke entweder nur vorgegeben (gesteuert) oder mittels entsprechender Rückmeldungen eingestellt (geregelt) werden.

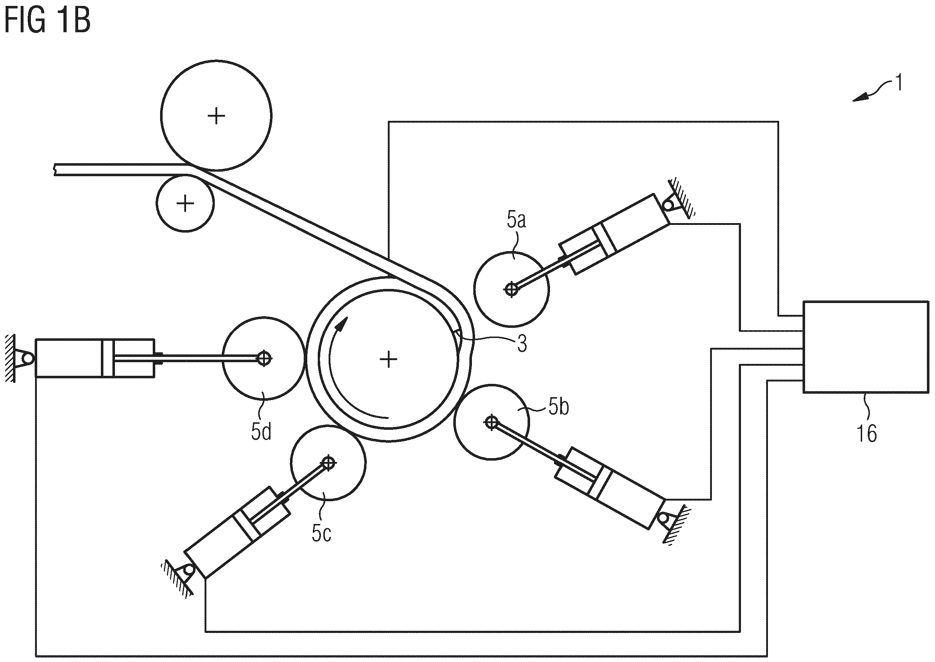

Fig 1A zeigt das Band 4 in einem Zustand kurz vor Vollendung der ersten Windung, d.h. das einlaufende Band 4 ist kurz davor, in einer zweiten Wicklungslage über den Bandanfang 3 gelegt zu werden. Der Zeitpunkt kurz nach Vollendung der ersten Windung ist in FIG 1B dargestellt, wobei die in Bezug auf die Bandlaufrichtung den Treiberrollen 17 nächstgelegene Korbrolle 5a vom Band 4 abgehoben ist, um Bandbeschädigungen durch den darunterliegenden Bandanfang 3 zu vermeiden. Sichtbar ist auch eine kleinräumige Krümmungsänderung des Windungsverlaufes des Bandes 4 im Bereich des Bandanfanges 3, die umso stärker ausgeprägt ist, je größer die Banddicke d ist, d.h. je höher die Stufe in radialer Richtung aufgrund des Bandanfanges 3 für eine darüberliegende Windung ist.

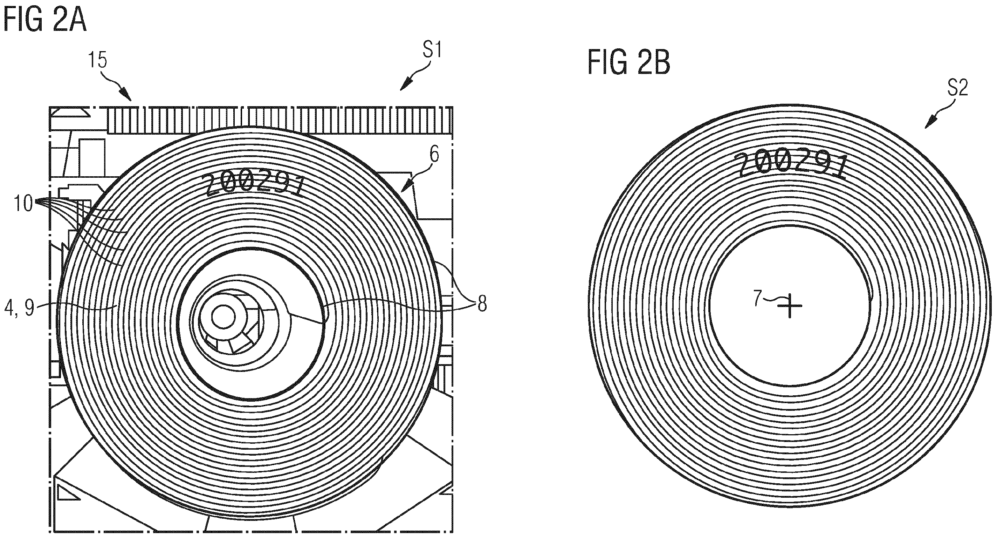

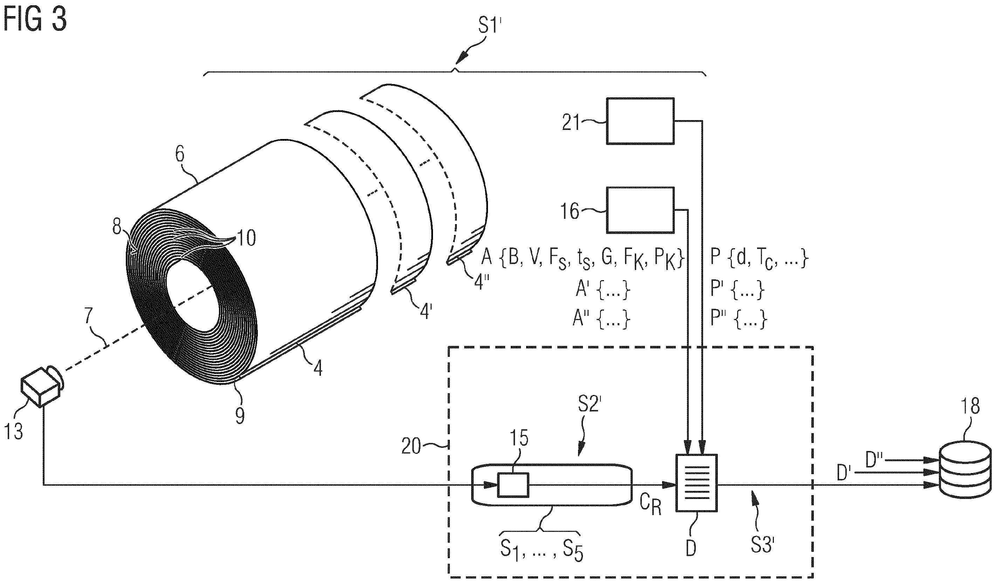

Die FIG 2A - FIG 2F zeigen in einem Ausführungsbeispiel die Schritte S1 bis S5 des erfindungsgemäßen Verfahrens zur Bestimmung eines Krümmungsradiusverlaufs C_{R} eines Coils 6 aus einem digitalen Bild 15 von diesem. Dabei können die Schritte S1 bis S5 beispielsweise von einer eigenen Recheneinheit 20 (→ siehe FIG 3) durchgeführt werden.

FIG 2A zeigt ein in einem ersten Schritt S1 von einer Digitalkamera 13 (in FIG 2A nicht dargestellt) erstelltes Bild 15 eines zu einem Coil 6 gewickelten Bandes 4. Eine Seitenfläche 9 des spiralförmig gewickelten Bandes 4 bildet über die einzelnen Coilwindungen 10 die Stirnseite 8 des Coils 6 aus. In dem Bild 15 ist neben der Stirnseite 8 auch die Umgebung des Coils 6 erfasst und durch entsprechende Strukturen angedeutet.

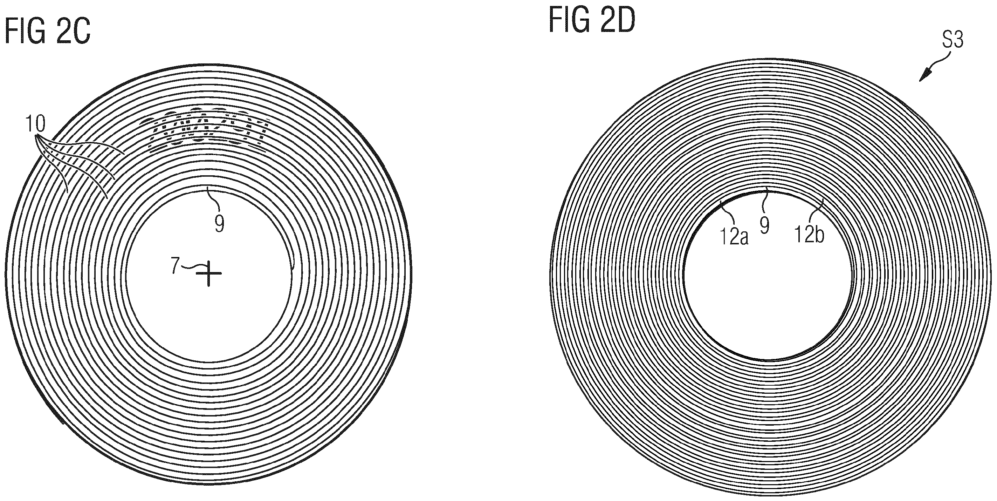

In einem zweiten Schritt S2 wird durch Ausführen eines ersten bildverarbeitenden Algorithmus die Stirnseite 8 in dem digitalen Bild 15 (bzw. in den digitalen Bilddaten) detektiert. Konkret wird der kreisringförmige Bereich der Stirnseite 8, der in FIG 2A durch zwei konzentrische Kreise angedeutet ist, bestimmt. Dabei werden jene Bildbereiche ausgeschieden, die nicht Bestandteil der Stirnfläche 8 sind. Dies ist in FIG 2B dargestellt; zudem wird auch die Lage der Coilachse 7 in dem Bild ermittelt, was in FIG 2B durch ein Kreuz angedeutet ist. Anschließend erfolgt im Falle von farbigen Bilddaten (z.B. weil das Bild 15 mit einer Mobiltelefonkamera aufgenommen wurde) eine Graustufenkonversion (z.B. durch die Extraktion eines künstlichen Luminanzkanals aus den einzelnen Farbkanälen des Bildes), was zu einer Kontraststeigerung in den Bilddaten führt, da das Signal-Rausch-Verhältnis durch die Kombination mehrerer Farbkanäle verbessert wird. Die monochromen Bilddaten werden gemäß dargestelltem Ausführungsbeispiel anschließend einer Weichzeichnung unterworfen, die nur in tangentialer Richtung R_{T} in Bezug auf die Coilachse 7 wirkt, was zu einer Unterdrückung von Bildstörungen (z.B. aufgrund von Verunreinigungen auf der Stirnseite 8) und somit zu einer deutlicheren Hervorhebung der einzelnen, die Seitenfläche 9 ausbildenden Coilwindungen 10 in den Bilddaten führt (FIG 2C).

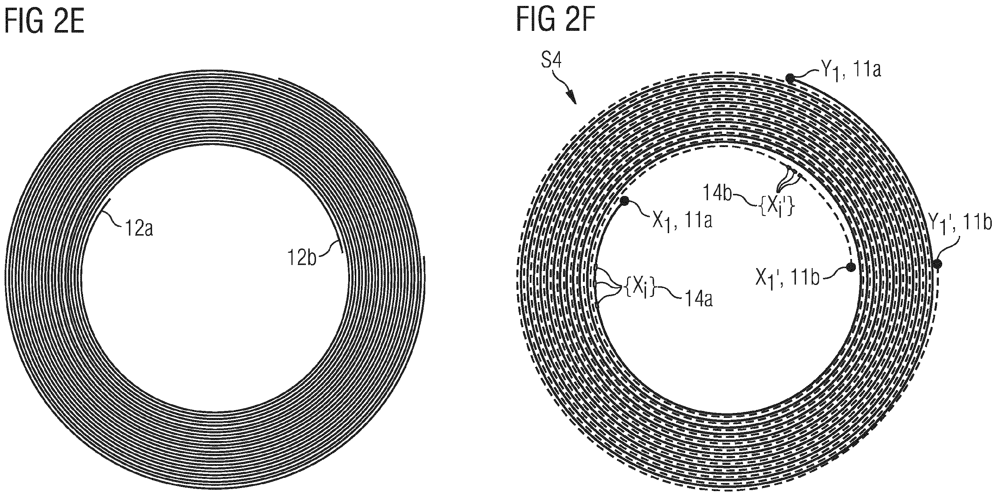

In einem darauffolgenden dritten Schritt S3 werden in dem Bild 15 durch Ausführen eines zweiten bildverarbeitenden Algorithmus zumindest eine Innenkante 12a und/oder eine Außenkante 12b der Seitenfläche 9 ermittelt (FIG 2D). In dem dargestellten Ausführungsbeispiel werden von dem zweiten bildverarbeitenden Algorithmus lokale Helligkeitsgradienten in den Bilddaten ausgewertet, woraus jeweils ein oder mehrere Paare paralleler Linienabschnitte - jeweils eine Linie korrespondierend zur Innenkante 12a und eine zur Außenkante 12b - resultieren. Anschließend erfolgt, wie voranstehend beschrieben und in FIG 2E dargestellt, eine Skelettierung und Binarisierung der in den Bilddaten bestimmten Innen- und Außenkante 12a, 12b, wobei als Resultat nur jene Bildbereiche verbleiben, die einen einfach zusammenhängenden Abschnitt der Innenkante 12a und der Außenkante 12b nachzeichnen.

FIG 2F zeigt einen vierten Schritt S4 im Ausführungsbeispiel des erfindungsgemäßen Verfahrens, in dem die Koordinaten Xᵢ der zur Innenkante 12a und die Koordinaten Xᵢ' der zur Außenkante 12b korrespondierenden Pixel bestimmt werden. Die Koordinaten X₁ bzw. X₁' korrespondieren dabei zum inneren (in Bezug auf die spiralförmige Coilwicklung) Endpunkt der Innen- bzw. Außenkante 12a, 12b und bilden den jeweils ersten Eintrag in einem Datenarray 14a bzw. 14b. Danach werden die weiteren, zur Innen- bzw. Außenkante 12a, 12b korrespondierenden Pixel bestimmt und entsprechend ihrer Lage entlang der Innen- bzw. Außenkante 12a, 12b in dem jeweiligen Datenarray 14a bzw. 14b angeordnet, bis der jeweils zweite (äußere) Endpunkt Y₁ bzw. Y₁' als jeweils letzter Eintrag im Datenarray 14a bzw. 14b erreicht ist.

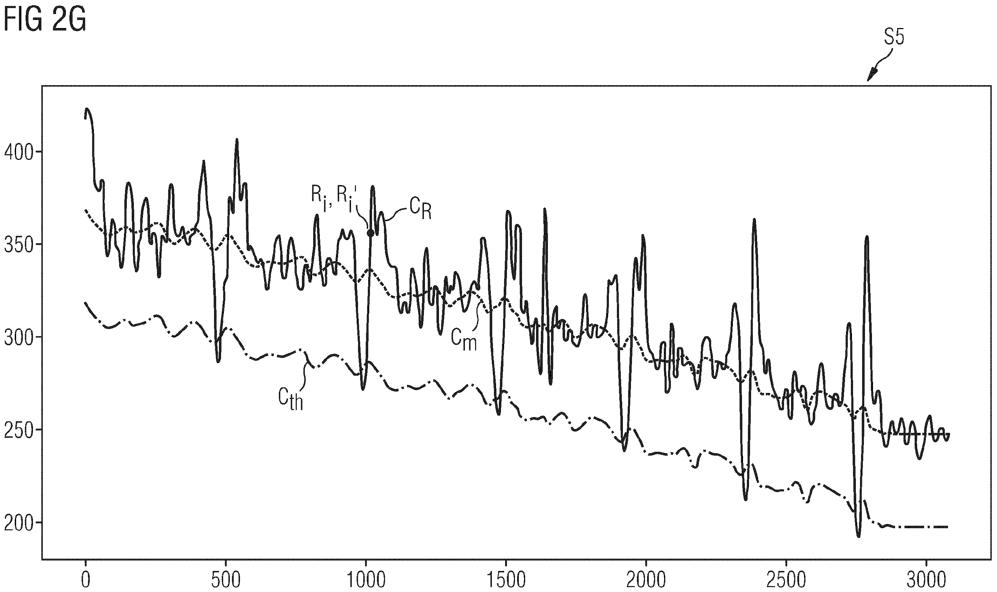

FIG 2G zeigt das Ergebnis eines fünften Schritts S5, in dem der Krümmungsradiusverlauf C_{R} als Funktion der Länge der Innen- bzw. Außenkante 12a, 12b aus einem oder aus beiden der Datenarrays 14a bzw. 14b ermittelt worden ist. Dabei bezeichnet die horizontale Achse eine Längenkoordinate der Innen- bzw. Außenkante 12a, 12b (bzw. der Bandlänge) in beliebigen Einheiten, während die vertikale Achse ein Maß für den Krümmungsradiusverlauf C_{R} angibt. Der Krümmungsradiusverlauf C_{R} liegt nach dem fünften Schritt S5 zwar als punktweise Funktion (korrespondierend zu den ausgewerteten Bildpixeln) vor, ist aufgrund der Vielzahl der Funktionswerte in FIG 2G jedoch als durchgezogene Linie dargestellt. Lediglich an einer Stelle ist stellvertretend ein einzelner Wert für einen ermittelten Krümmungsradius Rᵢ bzw. Rᵢ' als Punkt in der durchgezogenen Linie dargestellt. Die strichlierte Linie Cₘ stellt einen über die Längenkoordinate gemittelten Verlauf von C_{R} dar, für den beispielsweise jeweils 20 bis 50 benachbarte Werte von C_{R} gemittelt werden (sog. "moving average"). Die strichpunktierte Linie Cₜₕ stellt einen zum gemittelten Verlauf vertikal verschobenen Schwellwertverlauf dar.

FIG 2G zeigt, dass der Krümmungsradiusverlauf C_{R} und dessen gemittelter Verlauf Cₘ global betrachtet (d.h. über den gesamten ermittelten Wertebereich) abnimmt, d.h. dass die Krümmung des zu einem Coil 6 gewickelten Bandes 4 entsprechend abnimmt. Dies korrespondiert mit dem Umstand, dass im Ausführungsbeispiel der jeweils innenliegende Endpunkt der Innen- bzw. Außenkante 12a, 12b als Startwert X₁ bzw. X₁' für das Datenarray 14a, 14b verwendet wurde und der Krümmungsradiusverlauf C_{R} dementsprechend der spiralförmigen Coilwicklung von innen nach außen folgt. Neben kleineren Ausschlägen im Verlauf von C_{R}, die auf Bildfehler und Diskretisierungsfehler (aufgrund der endlichen Pixelgröße im digitalen Bild 15) zurückgeführt werden können, sind auch stark ausgeprägte lokale Maxima bzw. Minima erkennbar, die sich periodisch wiederholen: diese sind auf räumlich begrenzte Änderungen des Wicklungsverlaufes des Bandes 4 zurückzuführen, die aufgrund des Bandanfanges 3 entstehen. Der ermittelte Krümmungsradiusverlauf C_{R} bzw. eine Über/Unterschreitung des Schwellwertverlaufes Cₜₕ durch den Krümmungsradiusverlauf C_{R} kann somit als ein Qualitätskriterium zur Beurteilung des Wickelqualität der Bandes 4 durch die Haspelvorrichtung 1 herangezogen werden.

FIG 3 zeigt perspektivisch eine Anordnung einer Digitalkamera 13 vor einem fertig gewickelten Coil 6 entlang von dessen Coilachse 7, wobei die Blickrichtung der Digitalkamera 13 direkt (mit einer tolerierbaren Abweichung von bis zu 15°) auf eine Stirnseite 8 des Coils 6 gerichtet ist. Der Abstand der Digitalkamera 13 zur Stirnseite 8 ist dabei derart gewählt, dass in einem von der Digitalkamera 13 erstellten Bild 15 die einzelnen Coilwindungen 10 des Coils 6 voneinander unterscheidbar abgebildet werden. Die für die Digitalkamera 13 sichtbaren Coilwindungen 10 werden durch eine der beiden Seitenfläche 9 des Bandes 4 ausgebildet.

Gemäß einem Ausführungsbeispiel des erfindungsgemäßen Verfahrens zum Aufbau einer Datenbank 18 wird in einem ersten Schritt S1' ein metallisches Band 4 auf einem Haspeldorn 2 einer bestimmten Haspelvorrichtung 1 (in FIG 3 nicht dargestellt) zu dem Coil 6 aufgewickelt. In dem ersten Schritt S1' werden neben dem Bild 15 auch Anstellgrößen A des Haspeldorns 2 der Haspelvorrichtung 1 und Produktionsdaten P des Bandes 4 erfasst. Gemäß dargestelltem Ausführungsbeispiel umfassen die Anstellgrößen A einen Bandzug B, eine Voreilung V, eine Spreizkraft F_{S}, einen Nachspreizzeitpunkt t_{S} und einen Vorspreizgrad G für den Haspeldorn 2 sowie eine Anstellkraft F_{K} und eine Anstellposition P_{K} für zumindest eine der Korbrollen der Haspelvorrichtung 1, während die Produktionsdaten P zumindest eine Banddicke d und eine Wickeltemperatur T_{C} des Bandes 4 umfassen.

Die Anstellgrößen A werden einerseits während des Wickelvorganges von der zugehörigen Automatisierungseinheit 16 dem Haspeldorn 2 bzw. den Aktoren 19 der Korbrollen 5a,...,5d der Haspelvorrichtung 1 (in FIG 3 nicht dargestellt) vorgegeben und andererseits für die weitere Verarbeitung zusammen mit den Produktionsdaten P des Bandes 4 von einer speziell dafür vorgesehenen Recheneinheit 20 erfasst, die in FIG 3 durch ein strichliertes Rechteck symbolisiert ist.

Für die Erfassung der Anstellgrößen A und der Produktionsdaten P ist die Recheneinheit 20 datentechnisch zumindest mit einem der Haspelvorrichtung 1 übergeordneten Leitsystem 21 verbunden. In diesem Fall übernimmt die die Recheneinheit 20 sowohl die Anstellgrößen A als auch die Produktionsdaten P direkt von dem Leitsystem 21. Alternativ kann die Recheneinheit 20 zusätzlich, wie in FIG 3 dargestellt, datentechnisch auch direkt mit der Automatisierungseinheit 16 verbunden sein, um von dieser direkt die Anstellgrößen A zu übernehmen.

In einem zweiten Schritt S2' wird nach dem Aufwickeln des Bandes 4 zu dem Coil 6 von diesem aus einem mittels der Digitalkamera 13 erstellten Bild 15 gemäß dem voranstehend beschriebenen, erfindungsgemäßen Verfahren (umfassend die Schritte S1 bis S5) ein Krümmungsradiusverlauf C_{R} ermittelt, der in einem darauffolgenden dritten Schritt S3' zusammen mit den im ersten Schritt S1' erfassten Anstellgrößen A und Produktionsdaten P als ein Datensatz D in eine Datenbank 18 eingefügt wird.

Die Sequenz der Schritte S1', S2', S3' wird für eine Vielzahl (z.B. mehrere dutzend oder hundert) weiterer Bänder, die an derselben Haspelvorrichtung 1 gewickelt werden und von denen in FIG 3 stellvertretend die weiteren Bänder 4' und 4" angedeutet sind, wiederholt: dies ist in FIG 3 durch die zusätzlichen Produktionsdaten P', P", Anstellgrößen A', A" sowie die Datensätze D', D" symbolisiert.

### Bezugszeichenliste

- 1: Haspelvorrichtung
- 2: Haspeldorn
- 3: Bandanfang
- 4, 4', 4": Band
- 5a,..., 5d: Korbrolle
- 6: Coil
- 7: Coilachse
- 8: Stirnseite
- 9: Seitenfläche
- 10: Coilwindung
- 12a, 12b: Innen-, Außenkante
- 13: Digitalkamera
- 14a, 14b: Datenarray
- 15: digitales Bild
- 16: Automatisierungseinheit
- 17: Treiberrollen
- 18: Datenbank
- 19a,...,19d: Aktor
- 20: Recheneinheit
- 21: Leitsystem
- A, A', A": Anstellgrößen
- B: Bandzug
- d: Banddicke
- C_{R}: Krümmungsradiusverlauf
- Cₘ: gemittelter Krümmungsradiusverlauf
- Cₜₕ: Schwellwertverlauf
- D, D', D": Datensatz
- F_{K}: Anstellkraft Korbrolle
- F_{S}: Spreizkraft
- G: Vorspreizgrad
- N: natürliche Zahl
- P, P', P": Produktionsdaten
- P_{K}: Anstellposition Korbrolle
- R_{T}: tangentiale Richtung
- Rᵢ: Radius
- S1 ... S5: Verfahrensschritt
- S1' ... S3': Verfahrensschritt
- T_{C}: Wickeltemperatur
- t_{S}: Nachspreizzeitpunkt
- v_{B}: Einlaufgeschwindigkeit Band
- v_{D}: Haspeldorngeschwindigkeit
- V: Voreilung
- X₁, Xᵢ,: Koordinaten, Element Datenarray
- X₁', Xᵢ': Koordinaten, Element Datenarray

## Patentansprüche

1. Verfahren zur Bestimmung eines Krümmungsradiusverlaufs (C_{R}) eines um eine Coilachse (7) zu einem Coil (6) aufgewickelten metallischen Bandes (4) mit der Banddicke (d), umfassend die Schritte:
- erster Schritt (S1): Erstellen eines zweidimensionalen, digitalen Bildes (15) von einer durch eine Seitenfläche (9) des Bandes (4) ausgebildeten Stirnseite (8) des Coils (6) in Richtung der Coilachse (7),
- zweiter Schritt (S2): Detektieren der Stirnseite (8) in dem Bild (15),
- dritter Schritt (S3): Bestimmung einer Innen- und/oder Außenkante (12a, 12b) der Seitenfläche (9),
- vierter Schritt (S4) : bestimmen der Koordinaten (Xᵢ, Xᵢ') der zu der Innen- und/oder Außenkante (12a, 12b) korrespondierenden Pixel und Anordnen in einem jeweiligen Datenarray (14a, 14b),
- fünfter Schritt (S5): Ermitteln des Krümmungsradiusverlaufs (C_{R}) des Bandes (4) aus dem Datenarray (14a, 14b).

2. Verfahren nach Anspruch 1, wobei die Auflösung des Bildes (15) so bemessen ist, dass die Banddicke (d) auf zumindest drei Pixel des Bildes (15) abgebildet wird.

3. Verfahren nach Anspruch 1 oder 2, wobei nach dem zweiten Schritt (S2) ein Weichzeichnen des Bildes (15) in tangentialer Richtung (R_{T}) erfolgt.

4. Verfahren nach einem der vorangegangenen Ansprüche, wobei die Bestimmung der Innen- und/oder Außenkante (12a, 12b) auf Basis von lokalen Helligkeitsgradienten in dem Bild (15) erfolgt.

5. Verfahren nach einem der vorangegangenen Ansprüche, wobei nach dem dritten Schritt (S3) eine Skelettierung der Innen- und/oder Außenkante (12a, 12b) erfolgt.

6. Verfahren nach einem der vorangegangenen Ansprüche, wobei der Krümmungsradiusverlauf (C_{R}) dadurch ermittelt wird, dass für jedes Element (Xᵢ, Xᵢ') des Datenarrays (14a, 14b) das Element (Xᵢ, Xᵢ') selbst und zusätzlich N vor und N hinter dem Element (Xᵢ, Xᵢ') angeordnete Elemente (X_{i-N},...,X_{i+N}, X_{i-N}',...,X_{i+N}') des Datenarrays (14a, 14b) ausgewählt werden, in die räumlichen Koordinaten der ausgewählten Elemente (X_{i-N},...,X_{i+N}, X_{i-N}',...,X_{i+N}') ein Kreis mit dem Radius (Rᵢ) bzw. (Rᵢ') eingepasst wird und der Radius (Rᵢ) bzw. (Rᵢ') oder ein Kombinationswert aus (Rᵢ) und (Rᵢ') als ein Wert dem Krümmungsradiusverlauf (C_{R}) hinzugefügt wird.

7. Verfahren nach Anspruch 6, wobei 50 ≤ N ≤ 200 ist.

8. Verfahren nach Anspruch 6 oder 7, wobei die Ermittlung des Kreises mit Hilfe eines Least-Square-Fit-Verfahrens erfolgt.

9. Verfahren zum Aufbau einer Datenbank (18) für eine Haspelvorrichtung (1), die Haspelvorrichtung (1) umfassend einen Haspeldorn (2) und zumindest eine Korbrolle (5a,...,5d), wobei
- in einem ersten Schritt (S1') ein metallisches Band (4) von der Haspelvorrichtung (1) zu einem Coil (6) aufgewickelt wird, wobei Anstellgrößen (A) des Haspeldorns (2) und Produktionsdaten (P) des Bandes (4) erfasst werden,
- in einem zweiten Schritt (S2') ein Krümmungsradiusverlauf (C_{R}) des Bandes (4) gemäß einem der Ansprüche 1 bis 8 ermittelt wird,
- in einem dritten Schritt (S3') der Krümmungsradiusverlauf (C_{R}) zusammen mit den erfassten Anstellgrößen (A) und Produktionsdaten (P) als ein Datensatz (D) in die Datenbank (18) eingefügt wird, und
- wobei die Sequenz der Schritte (S1', S2', S3') für eine Vielzahl weiterer Bänder (4', 4") wiederholt wird.

10. Verfahren nach Anspruch 9, wobei die Produktionsdaten (P) zumindest eine Banddicke (d) und/oder eine Wickeltemperatur (T_{c}) umfassen.

11. Verfahren nach Anspruch 10, wobei die Produktionsdaten (P) weiterhin eine Streckgrenze und/oder eine Säbeligkeit und/oder eine Planheit und/oder einen Keilwert umfassen.

12. Verfahren nach Anspruch 9, wobei die Anstellgrößen (A) zumindest einen Bandzug (B) und/oder eine Voreilung (V) des Haspeldorns (2) und/oder eine Spreizkraft (F_{S}) zum Nachspreizen des Haspeldorns (2) und/oder einen Nachspreizzeitpunkt (t_{S}) des Haspeldorns (2) und/oder einen Vorspreizgrad (G) des Haspeldorns (2) umfassen.

13. Verfahren nach Anspruch 10, wobei die Anstellgrößen (A) weiterhin eine Anstellkraft (F_{K}) und/oder eine Anstellposition (P_{K}) für zumindest eine Korbrolle (5a,...,5d) umfassen.
